# EUROPEAN PATENT SPECIFICATION

(11) **EP 3 476 260 B1**
(45) Date of publication and mention of the grant of the patent: **16.12.2020**
(21) Application number: 18203840.6
(22) Date of filing: 31.10.2018
(51) Int. Cl.: A47J 31/44, A47J 31/60

(54) **DEVICE FOR FORMING MILK FOAM**
VORRICHTUNG ZUR ERZEUGUNG VON MILCHSCHAUM
DISPOSITIF DE FORMATION DE MOUSSE DE LAIT

(30) Priority: 31.10.2017 NL 2019838
(43) Date of publication of application: 01.05.2019
(73) Proprietor: ETNA Coffee Equipment B.V., 7007 CM Doetinchem (NL); VERON Austria GmbH, 6330 Kufstein (AT)
(72) Inventor: VEENHOF, Johannes, 6642 BJ Beuningen (NL); EMBACHER, Leonhard Georg, 6330 Kufstein (AT)
(74) Representative: Jilderda, Anne Ayolt

(56) References cited:
- EP-A1- 2 208 452
- WO-A1-2017/155403
- US-A1- 2005 172 833
- US-A1- 2005 233 043
- US-A1- 2011 049 187
- US-A1- 2012 305 597
- US-A1- 2017 013 996

## Description

The present invention relates to an apparatus for preparing foamed milk comprising supply means for a liquid milk product, foaming means which are able and configured to form the milk product in a production cycle to foamed milk, in particular at least substantially unheated foamed milk, and a product outlet at which the formed foamed milk is receivable, wherein the supply means, the foaming means and product outlet are mutually coupled by a product conduit, and wherein a cleaning device is provided which is able and configured to guide a flushing liquid in a flushing path through at least the foaming means and at least a part of the product conduit during a flushing cycle.

Such an apparatus is for instance known from a granted European patent EP 1.593.330 and is normally applied in or in combination with a coffee machine. In this known apparatus milk is suctioned out of a milk container by means of a pump and guided to an outlet. Air is introduced into the milk during transit in order to form foamed milk therefrom, and the foamed milk is guided through a throughflow heating element in order to heat the foamed milk. Initially in such a process the foamed milk is at least substantially unheated. Reference is therefore also made in this respect to cold foamed milk in contrast to hot foamed milk which has been formed from optionally full-fat milk by introducing hot steam.

The foamed milk is created by milk proteins present in milk which, when agitated, form chains which are manifested as an aerated foam. Cows' milk protein consists for the major part of casein protein which is responsible for this foaming behaviour. More than enough of this is available in standard milk to form a firm and tasty foam. The thus obtained foamed milk is employed to prepare foamed milk-containing coffee specialties such as cafe au lait, cappuccino, latte and latte macchiato.

Different mechanisms are applied in practice for such a forming of foamed milk. Milk is thus usually suctioned in and a gas blown into it in a foaming chamber. The combination of the thus induced turbulence results in the correct conditions in the forming of a firm milk foam. Hot steam is usually applied as gas, wherein a hot milk foam is formed. A cold milk foam can thus also be obtained however by injecting ambient air. Foamed milk can also be formed in mechanical manner by aggressively beating or agitating optionally heated milk with a whisk or stirrer inserted for the purpose.

A point of concern with such an apparatus is the limited shelf life of milk and unavoidable deposition of solid components in the milk conduits and other components which have come into contact with the milk. In order to avoid spoilage and contamination the apparatus must therefore be flushed regularly with a cleaning liquid. The apparatus is provided for this purpose with a cleaning device with which a suitable flushing liquid can be guided at set times through the respective parts of the apparatus.

An object here is to make the most effective and efficient possible use of the flushing liquid. A lower consumption of cleaning liquid not only results in lower costs, a time duration necessary for an effective cleaning can hereby also be shortened and a smaller discharge and drainage capacity is therefore required. An apparatus for preparing foamed milk according to the preamble of claim 1 is known from US2017/013996.

The present invention therefore has for its object to provide an apparatus for preparing foamed milk with a significantly more efficient and more effective flushing water management.

In order to achieve the stated object an apparatus of the type described in the preamble has the feature according to a first aspect of the invention that the cleaning device comprises injecting means which are able and configured to introduce a gas, in particular direct ambient air, into the flushing liquid in the flushing path during the flushing cycle, and in that a system of switchable valves and at least a recirculation conduit are provided which are switched during the flushing cycle in order to recirculate the flushing liquid a least a number of times in the flushing path through the product conduit and the foaming means. Gas bubbles are thus formed in the flushing liquid from the injected gas forced therein. Surprisingly, it has been found that ambient air which has been introduced directly from the surrounding area into the cleaning liquid brings about a significant improvement in respect of the cleaning capacity of the cleaning liquid. It is hereby possible to suffice with less flushing liquid and/or carry out a flushing cycle in a shorter time.

The invention is based on the insight that, following a passage through the conduits and components for cleaning, the flushing liquid will in practice still have retained a considerable part of its cleaning capacity. In the existing apparatus the flushing liquid which has been used once, but is nevertheless still active, is discharged from the apparatus and disposed of. According to this aspect of the invention however, the same flushing liquid is guided through the conduits and components again one or more times instead of being replaced by fresh liquid. A significant saving can thus be realized in respect of a quantity of cleaning liquid required for an effective cleaning.

The gas introduced according to the invention into the flushing liquid can be of diverse nature per se. It is assumed that the gas bubbles created therewith in the flushing liquid result in a wholly individual surface kinetics whereby a more powerful cleaning is achieved. Suitable candidates are for instance steam and carbon dioxide. A further preferred embodiment of the apparatus according to the invention has the feature here that the gas comprises air of at least substantially ambient temperature, in particular ambient air. Other than for instance steam and carbon dioxide, ambient air is always freely available and an artificial supply thereof need not therefore be maintained in or at the apparatus.

Air can also be injected into the flushing liquid with the same injecting means as can also be utilized to form foamed milk. A further preferred embodiment of the apparatus according to the invention therefore has the feature that the injecting means form part of the foaming means and introduce the gas into the milk product during the production cycle in order to form an at least substantially unheated foamed milk therefrom. The apparatus according to the invention particularly has the feature here that the injecting means comprise a proportionally adjustable air valve.

In a further preferred embodiment the apparatus is characterized according to the invention in that a switchable heating device is provided downstream of the foaming means which is able and configured to bring the foamed milk to an increased temperature, wherein the flushing path also comprises the heating device. Because of the switchable heating means the apparatus thus provides the option as desired of forming cold or hot foamed milk. Because the flushing path also comprises the heating means, these latter also have milk residues possibly remaining therein removed during each flushing cycle.

A particular embodiment of the apparatus according to the invention has the feature here that the heating device comprises a throughflow heating element, in particular a cascade of a number of throughflow heating elements, with a product-carrying conduit which extends therein, particularly along a meander and/or spiral track, wherein a wall of the product-carrying conduit is in heat-exchanging contact with a switchable heat source. Such a throughflow heating element is characterized by a product-carrying conduit with a wall which can be brought to an increased temperature and which enters into heat-exchanging contact with the product carried therethrough.

With a suitable choice of the cross-section of this conduit and the heating capacity associated therewith, the product can thus be brought to an increased temperature in an exceptionally short time and, by making use of a low heat capacity, an exceptionally rapid response time is achievable. A cascade circuit of a number of successive such elements provides the option here of realizing the desired product temperature in stepwise manner with a sufficiently large cross-section of the product-carrying conduit so as to counter clogging thereof by milk residues.

In respect of the throughflow heating element the conduit wall functions as thermodynamic transport channel between the product in the conduit and the heat source, for which use is preferably made of a switchable electrical heat source. This heat source can be located elsewhere, although a further preferred embodiment of the apparatus is however characterized in that the wall of the product-carrying conduit comprises a switchable heat source. The wall of the product-carrying conduit plays an active part in the heating process here since the required heat is generated therein. The wall comprises for this purpose an electrical resistance material, in particular of a thick film, which is connected to a switchable electrical power supply. The result is an exceptionally rapid response, low energy dissipation and an exceptionally compact construction.

In a further preferred embodiment the apparatus is characterized according to invention in that the heating device of the foaming means and the milk supply means are coupled to a control device and, after both have been switched on thereby, are successively switched off thereby while taking into account an intervening time period between switching off the heating means and only then switching off the supply means. During said intervening time period the heat source is switched off while the heating means still carry the product.

The product thus provides for a cooling of the heating means so that they are immediately ready to supply cold foam if desired during a subsequent production cycle. Such a final throughflow with unheated product moreover already provides for a certain flushing of the product-carrying conduit in the heating means and for a lesser degree of deposition of milk residues. The apparatus is more particularly characterized in this respect in that the foaming means are deactivated by the control device prior to the intervening time period, whereby the final flushing with non-foamed milk product takes place with a more effective cooling and flushing.

In order to enable cleaning of the milk-carrying conduit in a simple manner from the source, a particular embodiment of the apparatus according to the invention has the feature that during the production cycle the milk supply means are coupled via a milk supply conduit to a milk container for the milk product, and that during the flushing cycle the milk supply conduit is released from the milk container and coupled to a container for the flushing liquid.

The milk supply means particularly comprise a pump. In order to prevent fouling and particularly deposition of milk residues therein, a further preferred embodiment of the apparatus has the feature according to the invention that the pump is placed upstream of the foaming means and optional heating means in the product conduit.

The invention will be further elucidated hereinbelow with reference to an exemplary embodiment and an accompanying drawing. In the drawing:
- Figure 1: shows an exemplary embodiment of the apparatus according to the invention in a situation ready for a production cycle for dispensing foamed milk;
- Figure 2: shows the apparatus of figure 1 in a first situation ready for a flushing cycle;
- Figure 3: shows the apparatus of figure 1 in a second situation ready for a flushing cycle; and
- Figure 4: shows the apparatus of figure 1 in a third situation ready for a flushing cycle.

It is otherwise noted here that the figures are purely schematic and not always drawn to (the same) scale. Some dimensions in particular may be exaggerated to greater or lesser extent for the sake of clarity. Corresponding parts are designated in the figures with the same reference numeral.

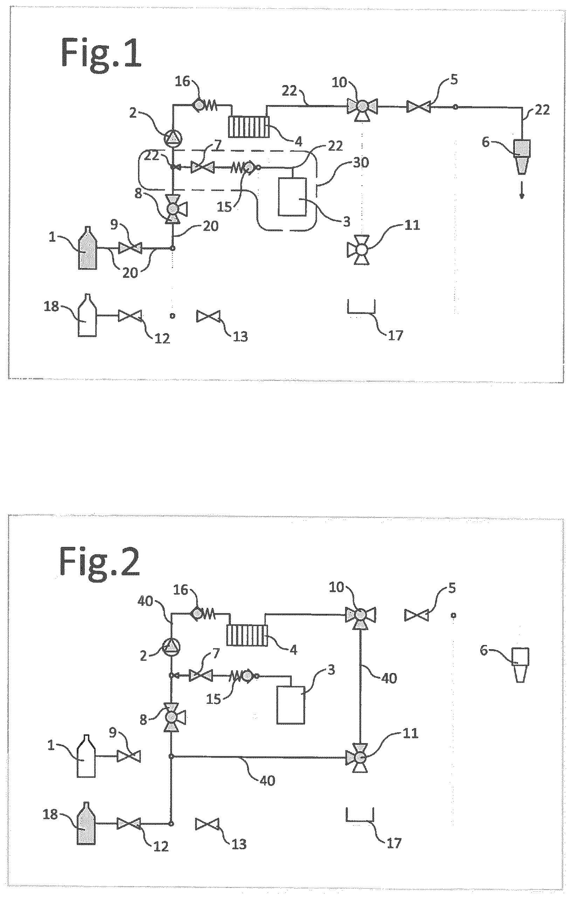

The apparatus shown in figure 1 comprises a container 1 for fresh milk which is preferably provided with cooling means in order to increase the shelf life of the milk. The milk container can be provided both internally and externally of the remaining part of the apparatus and typically has a volume of a part of a litre to several litres. The milk container is connected by means of a milk conduit 20 to a controllable pump 2 of the apparatus. The milk conduit can be left clear or closed by means of a blocking valve 9. In the situation shown in the figure valve 9 is opened as well as a continuous flow path in a three-way valve 8 which is applied as first switch valve 8, so that during operation milk will be suctioned out of container 1 by pump 2 via milk conduit 20.

For preparation of foamed milk the apparatus comprises a mechanically or electronically controllable foaming means 30. These foaming means comprise an adjustable air supply 3 which supplies a controllable flow of ambient air to an air supply conduit 21 provided for the purpose. Applied herefor in this example is an electronic proportionally adjustable air valve in combination with a mechanical non-return valve 15 in an air conduit 21. This air conduit is connected via a switchable valve 7 to the milk conduit. The pump and the conduit resistance provide for increased pressure in the system so that during operation air is injected under increased pressure into the milk so that it foams. Formed by this admixture of ambient air is cold, or at least not heated, foamed milk which continues on its way via the foam conduit 22 shown in the figure.

The foamed milk is subsequently guided over a switchable heating device 4. In this example this is a cascade of two throughflow heating elements of the so-called thick film type. Such heating elements are commercially available under the name 'thick film heater'. Such thick film heaters comprise a metal core which is covered (enamelled) with a glass-ceramic lining. The glass-ceramic provides electrical insulation and carries (conductive) heater tracks arranged thereon by means of for instance a screen-printing technique. The shape, size and electrical properties can be set and optimized for the present application. In addition, thermal sensors, temperature limiters and control elements can be integrated therein.

Thick film heaters can be designed with a very high power density combined with a low thermal mass. This results in ultra-fast heating of the liquid introduced therein. The energy transport is hereby very direct and efficient. This in turn ensures very rapid response times at switch-on and switch-off as a result of a relatively small heat capacity of its own in combination with a direct heat-exchanging contact between the heat source and the foamed milk. This heat source is formed by the product-carrying conduit in that a wall thereof carries one or more heater tracks and a switchable electric current is carried therethrough.

By forming two or more of such elements successively in series to a cascade a sufficiently great temperature increase can be realized in a short time so that hot foamed milk can be drawn off at an outlet 6 of the apparatus. Cold, or at least unheated foamed milk can also be obtained if desired. Heating device 4 will in that case not be switched on and the foam flows directly from foaming means 30 to product outlet 6.

All electrical and electronic components of the apparatus described above and below are controlled by a central control unit not further shown in the figure. Flow sensors and temperature sensors can moreover be coupled thereto in order to monitor the process. More or less air can be admixed by controlling air inlet 3, and non-return valve 15 can optionally be provided with an electronic controller for controlling an inlet pressure. A rotation speed of pump 2 is moreover controlled and monitored by the control system. All in all, the main process factors are hereby under the control of the control system for the purpose of preparing hot or cold foamed milk of a desired consistency and quantity. The apparatus also provides the option of dispensing with the supply of air via air valve 7 if desired, in which case hot or cold milk is received at outlet 6 depending on whether heating means 4 have been switched on or not.

For the purpose of product hygiene it is of great importance in the case of a milk-containing product to prevent contamination by, and deposition of, milk residues. The apparatus is provided for this purpose with a cleaning device which will be further elucidated with reference to figures 2 to 4.

With a view to a first type of flushing cycle, blocking valve 9 to milk container 1 is closed and milk conduit 20 is uncoupled therefrom and coupled to a container 18 with a suitable cleaning liquid. Applied as flushing liquid in this example is water to which a sufficient quantity of disinfectant has been added. It is also the case for container 18 that it can be provided both inside and outside the apparatus for preparing the foamed milk, while a volume thereof is geared to a sufficient number of flushing cycles. Container 18 can if desired comprise an exchangeable cassette (cartridge) so that the user can exchange it easily.

Container 18 with flushing liquid is opened via a blocking valve 12 while milk valve 9 is closed. Flushing liquid is thus now suctioned by pump 2 and guided through product conduit 21, 22. The flushing path of the flushing liquid further comprises in figure 2 the heating device 4, after which a system of switch valves 10, 11 provided for the purpose guides the flushing liquid back to the inlet so that the flushing liquid will circulate a number of times over this flushing path 40. The flushing liquid is thus utilized significantly more efficiently, this being manifested in a significantly smaller usage of flushing liquid. Switch valve 11 is finally switched in order to release cleaning liquid from the apparatus, which is then collected in a drip tray 17.

According to the invention a gas is furthermore admixed to the flushing liquid during the flushing cycle. In the situation shown in figure 2 the foaming means 30 are once again employed for this purpose. By setting these into operation during the flushing cycle ambient air is introduced via air conduit 22 and admixed into the flushing path. Air valve 7 is opened here. The pump and the conduit resistance provide for an increased pressure in the system, whereby the gas will dissolve in the liquid. It has been found that such an injection of gas into the flushing liquid results in a significantly more powerful and thorough cleaning of the conduits and components, which likewise has the result of less usage of flushing liquid. In addition, the duration of the flushing cycle can in this way be significantly shortened. All components and valves are also controlled and monitored by the control system during the flushing cycle(s) and a quantity and pressure of the admitted ambient air can be precisely controlled.

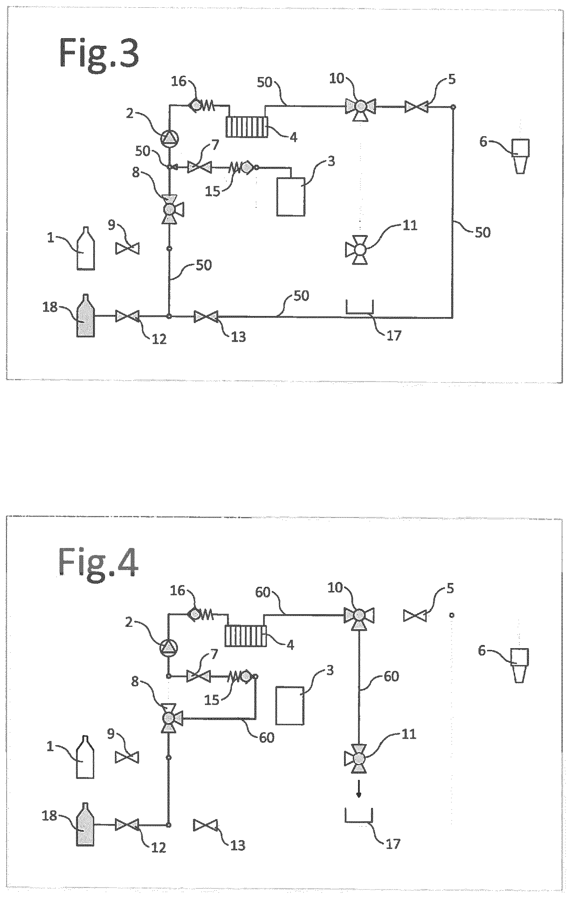

An alternative flushing path 50 is shown in figure 3. Switch valve 10 is switched here to a product delivery valve 5 instead of to the further switch valve 11. Delivery valve 5, which carries milk or foamed milk to outlet 6 during a normal production cycle, is thus also included in the cleaning cycle. Use is again also made here of a return conduit to the inlet via a flushing valve 13 provided for the purpose so that the flushing liquid will circulate through the system a number of times. Air is also admixed to the cleaning fluid in this mode from air injector 3 for a more effective cleaning. The return conduit is closed by closing flushing valve 13 and the used cleaning fluid then flows out of outlet 6 and so leaves the device.

Figure 4 finally shows a further flushing path 60 which is intended and configured to also flush the air conduit 22. First switch valve 8 is connected here to pump 2 via a part of air conduit 22 and non-return valve 15 and air valve 7 provided therein. Air injecting means 3 are now switched off. The liquid is now guided directly to drip tray 17 via switch valves 10, 11. These switch valves can likewise be activated in the flushing operations described above with reference to figures 2 and 3 in order to also enable discharge of flushing liquid into drip tray 17 if desired in these situations.

After having thus been cleaned, the apparatus is completely free of milk residues and deposits and the apparatus can once again be applied for preparation and delivery of foamed milk. A first production cycle is preferably preceded here by a flushing cycle with milk or water in order to remove possibly remaining flushing liquid.

Although the invention has been further elucidated above with reference to only several exemplary embodiments, it will be apparent that the invention is by no means limited thereto. On the contrary, many variations and embodiments are still possible within the scope of the invention, as defined in the appended claims, for a person with ordinary skill in the art.

## Claims

1. Apparatus for preparing foamed milk comprising supply means for a liquid milk product, foaming means which are able and configured to form the milk product in a production cycle to foamed milk, in particular at least substantially unheated foamed milk, and a product outlet at which the formed foamed milk is receivable, wherein the supply means, the foaming means and product outlet are mutually coupled by a product conduit, and wherein a cleaning device is provided which is able and configured to guide a flushing liquid in a flushing path through at least the foaming means and at least a part of the product conduit during a flushing cycle, **characterized in that** the cleaning device comprises injecting means which are able and configured to introduce a gas, in particular direct ambient air, into the flushing liquid in the flushing path during the flushing cycle, and **in that** a system of switchable valves and at least a recirculation conduit are provided which are switched during the flushing cycle in order to recirculate the flushing liquid a least a number of times in the flushing path through the product conduit and the foaming means.

2. Apparatus as claimed in claim 1, **characterized in that** the cleaning device comprises injecting means which are able and configured to introduce a gas into the flushing liquid in the flushing path during the flushing cycle.

3. Apparatus as claimed in claim 1, **characterized in that** the gas comprises air of at least substantially ambient temperature, in particular ambient air.

4. Apparatus as claimed in claim 3, **characterized in that** the injecting means form part of the foaming means and introduce the gas into the milk product during the production cycle in order to form an at least substantially unheated foamed milk therefrom.

5. Apparatus as claimed in claim 4, **characterized in that** the injecting means comprise a proportionally adjustable air valve.

6. Apparatus as claimed in one or more of the preceding claims, **characterized in that** a switchable heating device is provided downstream of the foaming means which is able and configured to bring the foamed milk to an increased temperature, wherein the flushing path also comprises the heating device.

7. Apparatus as claimed in claim 6, **characterized in that** the heating device comprises a throughflow heating element, in particular a cascade of a number of throughflow heating elements, with a product-carrying conduit which extends therein, particularly along a meander and/or spiral track, wherein a wall of the product-carrying conduit is in heat-exchanging contact with a switchable heat source.

8. Apparatus as claimed in claim 7, **characterized in that** the wall of the product-carrying conduit comprises a switchable heat source.

9. Apparatus as claimed in one or more of the preceding claims, **characterized in that** the heating device of the foaming means and the milk supply means are coupled to a control device and, after both have been switched on thereby, are successively switched off thereby while taking into account an intervening time period between switching off the heating means and only then switching off the supply means.

10. Apparatus as claimed in claim 9, **characterized in that** the foaming means are deactivated by the control device prior to the intervening time period.

11. Apparatus as claimed in one or more of the preceding claims, **characterized in that** during the production cycle the milk supply means are coupled via a milk supply conduit to a milk container for the milk product, and that during the flushing cycle the milk supply conduit is released from the milk container and coupled to a container for the flushing liquid.

12. Apparatus as claimed in one or more of the preceding claims, **characterized in that** the milk supply means comprise a pump and that the pump is placed upstream of the foaming means and optional heating means in the product conduit.

## Patentansprüche

1. Vorrichtung zur Herstellung von Milchschaum umfassend Zuführmittel für ein flüssiges Milchprodukt, Aufschäummittel welche dazu in der Lage sind und dazu eingerichtet sind das Milchprodukt in einem Produktionszyklus zu geschäumter Milch zu formen, insbesondere zumindest im Wesentlichen zu unerhitzter geschäumter Milch, und ein Produktaustritt an dem die geschäumte Milch empfangbar ist, wobei die Zuführmittel, die Aufschäummittel und der Produktaustritt durch eine Produktleitung miteinander verbunden sind, und wobei eine Reinigungseinrichtung bereitgestellt wird, welche dazu in der Lage ist und dazu eingerichtet ist in einem Spülzyklus eine Spülflüssigkeit entlang eines Spülpfads zumindest durch die Aufschäummittel und wenigstens einen Abschnitt der Produktleitung zu führen,
**dadurch gekennzeichnet, dass**
die Reinigungseinrichtung Injektionsmittel umfasst, welche dazu in der Lage sind und dazu eingerichtet sind ein Gas, insbesondere unmittelbare Umgebungsluft, in die Spülflüssigkeit im Spülpfad während des Spülzyklus einzuführen, und dass ein System aus schaltbaren Ventilen und zumindest einer Rezirkulationsleitung bereitgestellt wird, welche während dem Spülzyklus geschaltet werden, um die Spülflüssigkeit zumindest einige Male entlang des Spülpfads durch die Produktleitung und die Aufschäummittel zu rezirkulieren.

2. Vorrichtung gemäß Anspruch 1,
**dadurch gekennzeichnet, dass**
die Reinigungseinrichtung Injektionsmittel umfasst, welche dazu in der Lage sind und dazu eingerichtet sind ein Gas in die Spülflüssigkeit im Spülpfad während des Spülzyklus einzuführen.

3. Vorrichtung gemäß Anspruch 1,
**dadurch gekennzeichnet, dass**
das Gas Luft mit zumindest im Wesentlichen Umgebungstemperatur umfasst, insbesondere Umgebungsluft.

4. Vorrichtung gemäß Anspruch 3,
**dadurch gekennzeichnet, dass**
die Injektionsmittel einen Teil der Aufschäummittel ausbilden und das Gas in das Milchprodukt während dem Produktionszyklus einbringen, um aus dem Milchprodukt einen zumindest im Wesentlichen unerhitzten Milchschaum zu erzeugen.

5. Vorrichtung gemäß Anspruch 4,
**dadurch gekennzeichnet, dass**
die Injektionsmittel ein proportional einstellbares Luftventil umfassen.

6. Vorrichtung gemäß einem der vorherigen Ansprüche,
**dadurch gekennzeichnet, dass**
eine schaltbare Heizeinrichtung stromab der Aufschäummittel bereitgestellt wird, welche dazu in der Lage ist und dazu eingerichtet ist die aufgeschäumte Milch auf eine erhöhte Temperatur zu erwärmen, wobei der Spülpfad auch die Heizeinrichtung umfasst.

7. Vorrichtung gemäß Anspruch 6,
**dadurch gekennzeichnet, dass**
die Heizeinrichtung ein Durchlauferhitzerelement umfasst, insbesondere eine Kaskade aus einer Anzahl von Durchlauferhitzerelementen, mit einer produktführenden Leitung welche sich darin erstreckt, insbesondere entlang eines meanderförmigen und/oder spiralförmigen Pfads, wobei eine Wand der produktführenden Leitung mit einer schaltbaren Wärmequelle in wärmeübertragendem Kontakt steht.

8. Vorrichtung gemäß Anspruch 7,
**dadurch gekennzeichnet, dass**
die Wand der produktführenden Leitung eine schaltbare Wärmequelle umfasst.

9. Vorrichtung gemäß einem der vorherigen Ansprüche,
**dadurch gekennzeichnet, dass**
die Heizeinrichtung der Aufschäummittel und die Milch Zuführmittel an eine Steuerungseinrichtung gekoppelt sind, und, nachdem die Heizeinrichtung und die Zuführmittel von der Steuerungseinrichtung eingeschaltet wurden, die Steuerungseinrichtung die Heizeinrichtung und die Zuführmittel nacheinander ausschaltet, wobei die Steuerungseinrichtung die Zuführmittel ausschließlich unter Berücksichtigung einer zwischen dem Ausschalten der Heizeinrichtung und dem Ausschalten der Zuführmittel liegenden Zeitspanne ausschaltet.

10. Vorrichtung gemäß Anspruch 9,
**dadurch gekennzeichnet, dass**
die Aufschäummittel von der Steuerungseinrichtung vor Beginn der zwischen dem Ausschalten der Heizeinrichtung und dem Ausschalten der Zuführmittel liegenden Zeitspanne deaktiviert werden.

11. Vorrichtung gemäß einem der vorherigen Ansprüche,
**dadurch gekennzeichnet, dass**
die Milch Zuführmittel während dem Produktionszyklus über eine Milchversorgungsleitung an einen das Milchprodukt bevorratenden Milchbehälter angekoppelt sind, und dass die Milchversorgungsleitung während dem Spülzyklus vom Milchvorrat freigegeben und an einen Behälter für die Spülflüssigkeit angeschlossen ist.

12. Vorrichtung gemäß einem der vorherigen Ansprüche,
**dadurch gekennzeichnet, dass**
die Milch Zuführmittel eine Pumpe umfassen, und dass die Pumpe stromauf der Aufschäummittel und der optionalen Heizeinrichtung in der Produktleitung angeordnet ist.

## Revendications

1. Appareil destiné à la préparation de mousse de lait comprenant des moyens d'alimentation pour un produit laitier liquide, des dispositifs de moussage qui sont en mesure et configurés pour transformer le produit laitier dans un cycle de production en mousse de lait, en particulier au moins de la mousse de lait substantiellement non chauffée, et une sortie de produit au niveau de laquelle la mousse de lait formée peut être reçue, les moyens d'alimentation, les dispositifs de moussage et la sortie de produit étant mutuellement couplés par un conduit pour produit, et un dispositif de nettoyage étant prévu qui est en mesure et configuré pour guider un liquide de rinçage le long d'un circuit de rinçage à travers au moins les dispositifs de moussage et au moins une partie du conduit pour produit pendant un cycle de rinçage, **se caractérisant en ce que** le dispositif de nettoyage comprend des moyens d'injection qui sont en mesure et configurés pour introduire un gaz, en particulier l'air ambiant direct, dans le liquide de rinçage dans le circuit de rinçage pendant le cycle de rinçage, et **en ce qu'**un système de vannes commutables et au moins un conduit de recirculation sont prévus qui sont commutés pendant le cycle de rinçage afin de recycler le liquide de rinçage au moins plusieurs fois donné dans le circuit de rinçage à travers le conduit pour produit et les dispositifs de moussage.

2. Appareil selon la revendication 1, **se caractérisant en ce que** le dispositif de nettoyage comprend des moyens d'injection qui sont en mesure et configurés pour introduire un gaz dans le liquide de rinçage dans le circuit de rinçage pendant le cycle de rinçage.

3. Appareil selon la revendication 1, **se caractérisant en ce que** le gaz comprend de l'air au moins substantiellement à température ambiante, en particulier de l'air ambiant.

4. Appareil selon la revendication 3, **se caractérisant en ce que** les moyens d'injection font partie des dispositifs de moussage et introduisent le gaz dans le produit laitier pendant le cycle de production pour former une mousse de lait au moins substantiellement non chauffée.

5. Appareil selon la revendication 4, **se caractérisant en ce que** les moyens d'injection comprennent une vanne à air ajustable proportionnellement.

6. Appareil selon une ou plusieurs des revendications précédentes, **se caractérisant en ce qu'**un dispositif de chauffage commutable est installé en aval des dispositifs de moussage qui est en mesure et configuré pour faire monter la mousse de lait en température, le circuit de rinçage comprenant également le dispositif de chauffage.

7. Appareil selon la revendication 6, **se caractérisant en ce que** le dispositif de chauffage comprend un élément de chauffage en continu, en particulier une cascade de plusieurs éléments de chauffage en continu, avec tout le long un conduit de transport de produit, en particulier le long d'un parcours en serpentin et/ou en spirale, une paroi du conduit de transport de produit étant en contact avec une source de chaleur commutable de façon à ce qu'il y ait un échange de chaleur.

8. Appareil selon la revendication 7, **se caractérisant en ce que** la paroi du conduit de transport de produit comprend une source de chaleur commutable.

9. Appareil selon une ou plusieurs des revendications précédentes, **se caractérisant en ce que** le dispositif de chauffage des dispositifs de moussage et le moyen d'alimentation en lait sont couplés à un dispositif de contrôle et **en ce que**, après que chacun d'eux a été activé, chacun d'eux est successivement arrêté en laissant passer un laps de temps après l'arrêt du moyen de chauffage et en n'arrêtant le moyen d'alimentation qu'après ce laps de temps.

10. Appareil selon la revendication 9, **se caractérisant en ce que** les dispositifs de moussage sont désactivés par le dispositif de contrôle le laps de temps.

11. Appareil selon une ou plusieurs des revendications précédentes, **se caractérisant en ce que** pendant le cycle de production les moyens d'alimentation en lait sont couplés via un conduit d'alimentation en lait à un réservoir de lait pour le produit laitier, et **en ce que** pendant le cycle de rinçage le conduit d'alimentation en lait est libéré du réservoir de lait et couplé à un réservoir pour le liquide de rinçage.

12. Appareil selon une ou plusieurs des revendications précédentes, **se caractérisant en ce que** les moyens d'alimentation en lait comprennent une pompe et **en ce que** la pompe est placée en amont des dispositifs de moussage et des moyens de chauffage optionnels dans le circuit du produit.
